# EUROPÄISCHE PATENTANMELDUNG

(11) **EP 4 621 266 A1**
(43) Veröffentlichungstag der Anmeldung: **24.09.2025**
(21) Anmeldenummer: 25165416.6
(22) Anmeldetag: 21.03.2025
(51) Int. Cl.: F16H 49/00

(54) **GETRIEBE**

(30) Priorität: 21.03.2024 LU 506645
(71) Anmelder: Ovalo GmbH, 65555 Limburg (DE)
(72) Erfinder: Meudt, Marvin, 56410 Montabaur (DE)
(74) Vertreter: Hoffmann, Jürgen

(57) **Zusammenfassung**

Die Erfindung betrifft Getriebe mit einem ersten Getriebebauteilelement und einem zweiten Getriebebauteilelement, die mittels wenigstens eines Verformungskörpers verbunden sind, der Teil einer Drehmomentmessvorrichtung ist und der das erste Getriebebauteilelement und das zweite Getriebebauteilelement elastisch beweglich derart verbindet, dass eines der Getriebebauteilelemente durch eine Drehmomenteinwirkung um eine Rotationsachse relativ zu dem anderen der Getriebebauteilelemente rotierbar ist. Das Getriebe zeichnet sich dadurch aus, dass der wenigstens eine Verformungskörper derart ausgebildet und angeordnet ist, dass die aufgrund der Drehmomenteinwirkung auf ihn einwirkende Kraft zu wenigstens 80%, insbesondere ausschließlich, eine Druckkraft oder zu wenigstens 80%, insbesondere ausschließlich, eine Zugkraft ist.

## Beschreibung

Die Erfindung betrifft ein Getriebe mit einem ersten Getriebebauteilelement und einem zweiten Getriebebauteilelement, die mittels wenigstens eines Verformungskörpers verbunden sind, der Teil einer Drehmomentmessvorrichtung ist und der das erste Getriebebauteilelement und das zweite Getriebebauteilelement elastisch beweglich derart verbindet, dass eines der Getriebebauteilelemente durch eine Drehmomenteinwirkung um eine Rotationsachse relativ zu dem anderen der Getriebebauteilelemente rotierbar ist.

Getriebe sind in unterschiedlichen Bauformen bekannt und dienen dazu, Bewegungsgrößen zu ändern, wobei es sich bei der Bewegung oftmals um eine Rotationsbewegung handelt. Eine mögliche Bauform ist ein Spannungswellengetriebe.

Ein Spannungswellengetriebe besitzt zumeist ein starres, im Querschnitt kreisförmiges, innenverzahntes Zahnrad, das Circularspline genannt wird, und ein flexibles, außenverzahntes Zahnrad, das Flexspline genannt wird und das in dem von einem starren, innenverzahnten Zahnrad umgebenen Raumvolumen angeordnet ist. Innerhalb des Flexsplines ist ein zumeist ovaler Wellengenerator rotierbar angeordnet, dessen Außenumfang einen Lagersitz für ein radialflexibles Wälzlager aufweist. Über das radialflexible Wälzlager steht der Wellengenerator mit dem radialflexiblen, außenverzahnten Zahnrad in Kontakt. Das radialflexible Wälzlager ermöglicht es, den Wellengenerator relativ zu dem radialflexiblen, außenverzahnten Zahnrad rotieren zu können. Der Wellengenerator biegt das Wälzlager und den Flexspline zu einer ovalen Form, um die Verzahnungen des Circularsplines und des Flexsplines in der Hochachse des ovalen Wellengenerators miteinander in Eingriff zu bringen.

Der Flexspline weist eine geringere Anzahl von Zähnen auf als der Circularspline. Wenn der Wellengenerator rotiert, wälzt die Außenseite des Flexsplines auf der Innenseite des Circularsplines ab, wobei die Zähne des Flexsplines an gegenüberliegenden Seiten umlaufend in und außer Eingriff mit den Zähnen des Circularsplines gelangen. Aufgrund des Unterschiedes der Zähneanzahlen kommt es zu einer Drehung des Flexsplines relativ zu dem Circularspline, wenn der Wellengenerator rotiert und der Flexspline, beispielsweise relativ zu dem Getriebegehäuse, festgehalten wird. Der Wellengenerator ist zumeist elliptisch ausgebildet. Es ist jedoch jede von der Kreisform abweichende Form möglich, die im Ergebnis den beschriebenen Eingriff der Verzahnung des flexiblen, außenverzahnten Zahnrades in die Verzahnung des starren, innenverzahnten Zahnrades bewirkt. Auch ist es möglich, den Wellengenerator derart auszubilden, dass die Verzahnung des Flexsplines an drei oder mehr Stellen in die Verzahnung des Circularsplines eingreift.

In Ringbauweise eines Spannungswellengetriebes sind zwei innenverzahnte, starre Hohlräder (Circularspline und Dynamicspline) mit unterschiedlicher Zähnezahl vorhanden, deren Verzahnungen mit der Außenverzahnung der radialflexiblen, außenverzahnten Hülse (Flexspline) in Zahneingriff stehen. Hierbei weist eines der innenverzahnten Hohlräder dieselbe Anzahl von Zähnen auf wie der Flexspline, während das andere innenverzahnte Hohlrad mehr Zähne aufweist als der Flexspline.

Aus WO 2010 142318 A1 ist eine Vorrichtung zur Messung des Drehmoments, das auf eine Abtriebswelle eines Spannungswellengetriebes übertragen wird, bekannt. Die Vorrichtung weist ein Gehäuse, einen in dem Gehäuse montierten Circularspline und einen an die Abtriebswelle montierten Flexspline auf. Die Vorrichtung umfasst außerdem Sensoren, die zur Messung von Kräften zwischen dem Circularspline und dem Gehäuse angeordnet sind, sowie eine Recheneinheit, die Messsignale von den Sensoren empfängt und auf dieser Grundlage das übertragene Drehmoment berechnet.

Aus der europäischen Patentanmeldung EP 4 257 848 A1 ist ein Getriebesystem bekannt, das ein Drehmomentabstützelement und ein Dreiwellengetriebe beinhaltet. Das Dreiwellengetriebe weist wenigstens ein, insbesondere ringförmiges, Zahnrad auf. Das Zahnrad ist als Flansch ausgebildet oder weist einen Flansch auf. Das Zahnrad ist mittels eines elastisch verformbaren Koppelbauteils, das einen mit dem Flansch drehfest verbundenen Gegenflansch aufweist, an dem Drehmomentabstützelement festgelegt. Das Getriebesystem weist mit Dehnungsmessstreifen versehene Biegebalken auf, die bei einer Drehmomenteinwirkung gebogen werden. Dies ermöglicht es, ein auf das Getriebesystem einwirkende Drehmoment zu messen.

Die europäische Patentanmeldung EP 3 584 466 A1 offenbart ein Untersetzungsgetriebe mit einem Elektromotor. Das Untersetzungsgetriebe hat eine Hohlwelle, die sich in einer axialen Richtung um eine erste Mittelachse erstreckt, ein rohrförmiges Gehäuse, das an der Hohlwelle befestigt ist, ein festes Teil, das in Bezug auf das Gehäuse relativ ortsfest ist. Das Untersetzungsgetriebe hat außerdem einen Drehzahlreduktionsmechanismus, der die Drehbewegung des Elektromotors überträgt sowie ein Ausgangsteil, das sich in Bezug auf die erste Mittelachse mit reduzierter Drehgeschwindigkeit dreht. Das Untersetzungsgetriebe weist einen Drehmomentsensor auf, der mit dem Gehäuse und dem festen Teil verbunden ist. Der Drehmomentsensor hat einen elastisch verformbaren Dehnungskörper, der einen ringförmigen Außenring und einen ringförmigen Innenring sowie eine Vielzahl von Dehnungssensoren hat. Der Außenring befindet sich an einem Endabschnitt an der radialen Außenseite des Drehmomentsensors und ist entweder mit dem Gehäuse oder dem feststehenden Teil verbunden. Der Innenring befindet sich an einem Endabschnitt an der radialen Innenseite des Drehmomentsensors und ist mit dem anderen Teil, d. h. dem Gehäuse oder dem feststehenden Teil, verbunden. Jeder der mehreren Dehnungssensoren ist zumindest teilweise in radialer Richtung zwischen dem Außenring und dem Innenring angeordnet.

Die europäische Patentanmeldung EP 4 130 512 A1 offenbart ein Spannungswellengetriebe in Ringbauweise mit zwei innenverzahnten Hohlrädern, bei dem ein Kreuzrollenlager als Abtriebslager fungiert. Das Abtriebslager ist axial im Bereich des Flexsplines angeordnet. Eines der innenverzahnten Hohlräder des Spannungswellengetriebes ist als eine Bestandteil einer Drehmomentmessvorrichtung ausgebildet. Aus WO 2023 132 109 A1 ist ein sehr ähnlich aufgebautes Spannungswellengetriebe bekannt.

Es ist die Aufgabe der vorliegenden Erfindung, ein Getriebe mit einer Drehmomentmessvorrichtung der eingangs genannten Art anzugeben, das eine präzise Drehmomentmessung erlaubt.

Die Aufgabe wird durch ein Getriebe gelöst, das dadurch gekennzeichnet ist, dass der wenigstens eine Verformungskörper derart ausgebildet und angeordnet ist, dass die aufgrund der Drehmomenteinwirkung auf ihn einwirkende Kraft zu wenigstens 80%, insbesondere ausschließlich, eine Druckkraft oder zu wenigstens 80%, insbesondere ausschließlich, eine Zugkraft ist.

Während beispielsweise bei Getrieben, deren Drehmomentmessvorrichtung Biegebalken aufweist (wie bei dem aus EP 4 257 848 A1 bekannten Getriebe), die Zug- und Druckkräfte immer zu gleichen Teilen in jedem Biegebalken vorhanden sind, wurde in erfindungsgemäßer Weise erkannt, dass eine viel präzisere Drehmomentmessung ermöglicht ist, wenn die aufgrund der Drehmomenteinwirkung auf den Verformungskörper einwirkende Kraft zu wenigstens 80%, vorzugsweise ausschließlich, eine Druckkraft oder zu wenigstens 80%, vorzugsweise ausschließlich, eine Zugkraft ist, weil aufgrund dieser Kräfte weitgehend ausschließlich eine Stauchung bzw. eine Längung des Verformungskörpers erfolgt (und eine Biegung und/oder Scherung zumindest weitgehend vermieden ist), was beispielsweise mittels eines oder mehrerer Dehnungsmessstreifen einfach und präzise erfasst werden kann. Insbesondere ermöglicht es die Erfindung darüber hinaus, Messsignalanteile, die nicht durch die Druckkraft oder die Zugkraft verursacht sind, insbesondere Messsignalanteile, die durch Querkräfte verursacht sind, zu erkennen und rechnerisch und/oder durch eine elektrische oder elektronische Verschaltung der Dehnungsmessstreifen, bei der sich derartige Messsignalanteile gegenseitig aufheben, zu kompensieren.

Bei einer besonderen Ausführung bilden das erste Getriebebauteilelement und das zweite Getriebebauteilelement zusammen mit dem sie verbindenden wenigstens einen Verformungskörper ein Getriebebauteil, welches ein Drehmoment überträgt oder ein Drehmoment abstützt.

Das Getriebebauteil und/oder das erste Getriebebauteilelement und/oder das zweite Getriebebauteilelement können vorteilhaft ringförmig ausgebildet sein. Beispielsweise kann es sich bei einem Getriebebauteil, welches das erste und das zweite Getriebebauteilelement aufweist, um ein verzahntes, insbesondere innenverzahntes, Hohlrad, insbesondere eines Spannungswellengetriebes oder eines Planetengetriebes, handeln.

Bei einer vorteilhaften Ausführung weist das erste Getriebebauteilelement eine Verzahnung auf. Alternativ oder zusätzlich kann das zweite Getriebebauteilelement eine Verzahnung aufweisen. Insbesondere kann es sich bei dem Getriebebauteil, welches das erste und das zweite Getriebebauteilelement aufweist, um ein Zahnrad und/oder eine Welle handeln.

Bei einer vorteilhaften Ausführung sind das erste Getriebebauteilelement und/oder das zweite Getriebebauteilelement Teil eines Lagers, mittels dem eine Getriebewelle rotierbar gelagert ist. Bei einer besonders vorteilhaften Ausführung ist ein Getriebebauteil, welches das erste und das zweite Getriebebauteilelement aufweist, Teil eines Lagers, mittels dem eine Getriebewelle rotierbar gelagert ist. Beispielsweise können das Getriebebauteil, das erste Getriebebauteilelement oder das zweite Getriebebauteilelement ein Außenring oder ein Innenring eines Wälz- oder Gleitlagers sein. Das Wälzlager kann insbesondere ein Kugellager, ein doppelreihiges Wälzlager oder ein Kreuzrollenlager sein.

Das erste Getriebebauteilelement oder das zweite Getriebebauteilelement können als Getriebegehäuse ausgebildet sein oder Teil eines Getriebegehäuses sein.

Bei einer vorteilhaften Ausführung ist der Verformungskörper an dem ersten Getriebebauteilelement und/oder an dem zweiten Getriebebauteilelement, insbesondere zerstörungsfrei wieder lösbar, befestigt. Es ist es auch möglich, dass der Verformungskörper mit dem ersten Getriebebauteilelement und/oder mit dem zweiten Getriebebauteilelement gemeinsam einstückig hergestellt ist.

Bei einer besonders vorteilhaften Ausführung ist der Verformungskörper Teil eines Verbinders, der an dem ersten Getriebebauteilelement und/oder an dem zweiten Getriebebauteilelement befestigt ist.

Das Getriebe kann vorteilhaft in der Weise ausgebildet sein, dass der Verbinder einen ersten Befestigungsabschnitt aufweist, mittels dem er an dem ersten Getriebebauteilelement befestigt ist, und dass der Verbinder außerdem einen zweiten Befestigungsabschnitt aufweist, mittels dem er an dem zweiten Getriebebauteilelement befestigt ist. Eine solche Ausführung erlaubt ein ganz besonders flexibles Herstellen von Getrieben mit unterschiedlichen Eigenschaften.

Insbesondere kann vorteilhaft vorgesehen sein, dass das erste Getriebebauteilelement und das zweite Getriebebauteilelement zusammen mit den sie verbindenden Verbindern ein Getriebebauteil bilden, welches ein Drehmoment überträgt oder ein Drehmoment abstützt.

Die Befestigung des Verbinders mit dem ersten Getriebebauteilelement und/oder mit dem zweiten Getriebebauteilelement kann beispielsweise eine kraftschlüssige Verbindung aufweisen oder als ausschließlich kraftschlüssige Verbindung ausgebildet sein. Beispielsweise kann vorteilhaft vorgesehen sein, dass ein erster oder zweiter Befestigungsabschnitt des Verbinders zwischen zwei Teilen des Getriebebauteilelements eingeklemmt wird, wobei beispielsweise eine Klemmschraube und/oder eine Feder vorhanden sein kann, um die Klemmkraft bereitzustellen.

Alternativ oder zusätzlich kann die Befestigung des Verbinders mit dem ersten Getriebebauteilelement und/oder mit dem zweiten Getriebebauteilelement eine formschlüssige Verbindung, insbesondere eine Steckverbindung, aufweisen. Es ist vorteilhaft auch möglich, dass die Befestigung des Verbinders mit dem ersten Getriebebauteilelement und/oder dem zweiten Getriebebauteilelement als ausschließlich formschlüssige Verbindung ausgebildet ist.

Bei einer ganz besonders vorteilhaften Ausführung ist die Befestigung des Verbinders mit dem ersten Getriebebauteilelement und/oder dem zweiten Getriebebauteilelement zerstörungsfrei lösbar ausgebildet. Eine solche Ausführung ist ganz besonders flexibel verwendbar, insbesondere im Hinblick auf eine spätere Umrüstung des Getriebes. Beispielsweise kann ein Verbinder, der keinen Sensor aufweist, bei einer solchen Ausführung einfach gegen einen Verbinder, der einen Sensor aufweist oder als Sensor ausgebildet ist, ausgetauscht werden.

Bei einer ganz besonders vorteilhaften Ausführung ist der erste Befestigungsabschnitt als Steckabschnitt ausgebildet oder weist einen Steckabschnitt auf, der, insbesondere passgenau, in eine Steckausnehmung des Getriebebauteilelements eingreift. Alternativ oder zusätzlich kann der zweite Befestigungsabschnitt als Steckabschnitt ausgebildet sein oder einen Steckabschnitt aufweisen, der, insbesondere passgenau, in eine Steckausnehmung des Getriebebauteilelements eingreift. Insbesondere kann vorteilhaft vorgesehen sein, dass der jeweilige Steckabschnitt axial oder radial in die Steckausnehmung des Getriebebauteilelements eingreift. Bei einer solchen Ausführung ist die jeweilige Steckverbindung weitestgehend von den bei Belastung des Getriebes in Umfangsrichtung wirkenden Kräften entkoppelt, so dass ein ungewolltes Lösen der Steckverbindung verhindert ist.

Ganz allgemein kann vorteilhaft vorgesehen sein, dass der Verformungskörper durch das übertragene und/oder abgestützte Drehmoment ausschließlich auf Druck belastet wird. Eine solche Ausführung ermöglicht es beispielsweise, die Druckkräfte zu messen und aus den gemessenen Druckkräften auf das übertragene Drehmoment zu schließen. Der Verformungskörper kann insbesondere als Druckstab ausgebildet sein. Der Druckstab kann seinerseits durch einen Schenkel des Verbinders, insbesondere einen von mehreren Schenkeln des Verbinders, gebildet sein.

Ganz allgemein kann vorteilhaft vorgesehen sein, dass der Verformungskörper durch das übertragene und/oder abgestützte Drehmoment ausschließlich auf Zug belastet wird. Eine solche Ausführung ermöglicht es beispielsweise, die Zugkräfte zu messen und aus den gemessenen Druckkräften auf das übertragene Drehmoment zu schließen. Der Verformungskörper kann insbesondere als Zugstab ausgebildet sein. Der Zugstab kann seinerseits durch einen Schenkel des Verbinders, insbesondere einen von mehreren Schenkeln des Verbinders, gebildet sein.

Ein einheitlicher und ausschließlicher Typ von auf den Verbinder wirkenden Belastungen, nämlich vorzugsweise ausschließlich Zug- und/oder Druckbelastungen, ist besonders Vorteilhaft, um bei der Auswertung der Messsignale Störgrößen ausschließen zu können.

Bei einer besonders vorteilhaften Ausführung ist die aufgrund der Drehmomenteinwirkung auf den Verformungskörper einwirkende Kraft in Abhängigkeit von dem Vorzeichen des Drehmomentes eine Druckkraft oder eine Zugkraft.

In Bezug auf die Richtung des Drehmoments gilt üblicherweise die Konvention, dass ein im Uhrzeigersinn wirkendes Drehmoment als negativ und ein gegen den Uhrzeigersinn wirkendes Drehmoment als positiv betrachtet wird. Diese Festlegung basiert auf der sogenannten Rechte-Hand-Regel: Wenn man die Finger der rechten Hand in Richtung der Drehbewegung krümmt, zeigt der Daumen in die Richtung des positiven Drehmoments entlang der Drehachse.

An dem wenigstens einen Verformungskörper kann vorteilhaft wenigstens ein Verformungsmesssensor, insbesondere ein Dehnungsmessstreifen, befestigt sein. Insbesondere kann vorteilhaft vorgesehen sein, dass der Verformungsmesssensor eine aufgrund der Zugkraft bzw. Druckkraft verursachte elastische Verformung, insbesondere eine Längung oder eine Stauchung, des Verformungskörpers erfasst.

Die Drehmomentmessvorrichtung weist bei einer vorteilhaften Ausführung eine elektronische Auswertevorrichtung auf, die dazu ausgebildet und eingerichtet ist, Messsignale von dem wenigstens einen Verformungsmesssensor zu empfangen und daraus ein Drehmoment und/oder eine Drehzahl einer Getriebewelle und/oder eine Drehstellung einer Getriebewelle und/oder eine Drehrichtung einer Getriebewelle zu ermitteln.

Vorzugsweise sind mehrere Verformungskörper Teil der Drehmomentmessvorrichtung, wobei die Verformungskörper das erste Getriebebauteilelement und das zweite Getriebebauteilelement elastisch beweglich derart verbinden, dass eines der Getriebebauteilelemente durch eine Drehmomenteinwirkung um eine Rotationsachse relativ zu dem anderen der Getriebebauteilelemente rotierbar ist. Hier ist vorzugsweise jeder Verformungskörper derart ausgebildet und angeordnet, dass die aufgrund der Drehmomenteinwirkung auf ihn einwirkende Kraft zu wenigstens 80%, insbesondere ausschließlich, eine Druckkraft oder zu wenigstens 80%, insbesondere ausschließlich, eine Zugkraft ist.

Bei einer ganz besonders vorteilhaften Ausführung weist der Verbinder sowohl wenigstens einen auf Druck belasteten Verformungskörper, als auch wenigstens einen auf Zug belasteten Verformungskörper auf. Eine solche Ausführung ermöglicht es beispielsweise, sowohl die Druckkräfte als auch die Zugkräfte zu messen und aus den gemessenen Druckkräften und den gemessenen Zugkräften auf das übertragene und/oder abgestützte Drehmoment zu schließen. Eine solche Drehmomentmessung ist besonders genau und robust gegenüber Störgrößen.

Hierbei kann das Getriebe derart ausgebildet sein, dass auf einen ersten der Verformungskörper des Verbinders zu wenigstens 80%, insbesondere ausschließlich, eine Zugkraft einwirkt und auf einen zweiten der Verformungskörper des Verbinders zu wenigstens 80%, insbesondere ausschließlich, eine Druckkraft einwirkt und dass bei umgekehrtem Vorzeichen des Drehmomentes auf den ersten der Verformungskörper des Verbinders zu wenigstens 80%, insbesondere ausschließlich, eine Druckkraft einwirkt und auf einen zweiten der Verformungskörper des Verbinders zu wenigstens 80%, insbesondere ausschließlich, eine Zugkraft einwirkt.

Die Verformungskörper sind bei einer vorteilhaften Ausführung hinsichtlich Form und Größe gleich ausgebildet. Eine solche Ausführung hat den besonderen Vorteil, dass die Kräfte symmetrisch wirken und das Verhalten der Drehmomentmessvorrichtung besonders gut an Hand einer Modellrechnung vorhersagbar ist.

Wie bereits erwähnt kann vorteilhaft vorgesehen sein, dass die mehreren Verformungskörper derart elektrisch und/oder elektronisch miteinander verschaltet sind, dass sich Messsignalanteile, die nicht durch die Druckkraft oder die Zugkraft verursacht sind, insbesondere Messsignalanteile, die durch Querkräfte verursacht sind, zumindest teilweise gegenseitig kompensieren. Hierdurch wird eine besonders genaue Drehmomentmessung ermöglicht.

Es ist vorteilhaft auch möglich, dass die Auswertevorrichtung Messsignalanteile, die nicht durch die Druckkraft oder die Zugkraft verursacht sind, insbesondere Messsignalanteile, die durch Querkräfte verursacht sind, erkennt und rechnerisch derart kompensiert, dass der ermittelte Drehmomentwert frei oder zumindest weitgehend frei von diesen Störeinflüssen ist.

Das erfindungsgemäße Getriebe kann beispielsweise ein Planetengetriebe oder ein Zykloidgetriebe sein.

Insbesondere kann das erfindungsgemäße Getriebe ein Spannungswellengetriebe sein. Bei einer solchen Ausführung können das erste Getriebebauteilelement oder das zweite Getriebebauteilelement Teile eines Circularsplines oder eines Dynamicsplines oder eines Flexsplines oder eines Wellengeneratoreinsatzes ein. Insbesondere kann ein Getriebebauteil, welches das erste und das zweite Getriebebauteilelement aufweist, vorteilhaft ein Circularspline oder ein Dynamicspline oder ein Flexspline oder ein Wellengeneratoreinsatz sein.

In ganz besonders vorteilhafter Weise kann das Getriebe als ein Dreiwellengetriebe ausgebildet sein, bei dem eine rotierbar gelagerte erste Welle als Getriebeantrieb fungiert, eine rotierbar gelagerte zweite Welle als Getriebeabtrieb fungiert und eine dritte Welle, insbesondere relativ zu dem Getriebegehäuse, drehfest gehalten ist.

Ganz besonders vorteilhaft ist es, wenn die Anzahl der Verbinder ohne strukturelle Veränderung des ersten Getriebebauteilelements und/oder des zweiten Getriebebauteilelements, vorzugsweise werkzeugfrei, veränderbar ist. Dies hat den ganz besonderen Vorteil, dass das erste Getriebebauteilelement und das zweite Getriebebauteilelement bei der Herstellung des Getriebes mit einer höheren Anzahl von Verbindern miteinander verbunden werden können, wenn eine höhere Drehsteifigkeit des ersten Getriebebauteilelements relativ zu dem zweiten Getriebebauteilelement gewünscht ist, und dass alternativ das erste Getriebebauteilelement und das zweite Getriebebauteilelement mit einer niedrigeren Anzahl von Verbindern miteinander verbunden werden, wenn eine niedrigere Drehsteifigkeit des ersten Getriebebauteilelements relativ zu dem zweiten Getriebebauteilelement gewünscht ist. Auf diese Weise sind ganz effizient Getriebe mit unterschiedlichen Eigenschaften herstellbar.

Insbesondere hierfür kann vorteilhaft vorgesehen sein, dass das Getriebe mehrere gleich ausgebildete Verbinder aufweist, oder dass das Getriebe zumindest mehrere hinsichtlich Größe und Form gleich ausgebildete Verbinder aufweist. Es ist vorteilhaft möglich, dass das Getriebe mehrere hinsichtlich Größe und Form gleich ausgebildete Verbinder aufweist, von denen sich jedoch mindestens zwei hinsichtlich des Vorhandenseins oder der Art des Sensors und/oder hinsichtlich ihrer Verformungseigenschaften, insbesondere hinsichtlich ihrer Elastizität, voneinander unterscheiden. Die Gleichheit von Größe und Form ermöglicht es, individuell Verbinder mit unterschiedlichen Eigenschaften und/oder Sensoren zu verwenden, ohne eine strukturelle Veränderung des ersten Getriebebauteilelements und/oder des zweiten Getriebebauteilelements vornehmen zu müssen.

Es ist vorteilhaft insbesondere möglich, dass das Getriebe mehrere hinsichtlich Größe und Form und Anordnung der Befestigungsabschnitte gleich ausgebildete Verbinder aufweist, von denen sich jedoch mindestens zwei hinsichtlich des Vorhandenseins oder der Art des Sensors und/oder hinsichtlich ihrer Verformungseigenschaften, insbesondere hinsichtlich ihrer Elastizität, voneinander unterscheiden. Die Gleichheit von Größe und Form und Anordnung der Befestigungsabschnitte ermöglicht es, individuell Verbinder mit unterschiedlichen Eigenschaften und/oder Sensoren zu verwenden, ohne eine strukturelle Veränderung des ersten Getriebebauteilelements und/oder des zweiten Getriebebauteilelements vornehmen zu müssen.

Gemäß der Erfindung ist es beispielsweise möglich, dass die Anzahl der verwendeten Verbinder wenigstens eines der herzustellenden Getriebe kleiner ist als die Anzahl der Gegenbefestigungsabschnitte des ersten Getriebebauteilelements und/oder kleiner als die Anzahl der weiteren Gegenbefestigungsabschnitte des zweiten Getriebebauteilelements dieses Getriebes. Wenn weniger Verbinder eingesetzt werden als aufgrund der Anzahl der Gegenbefestigungsabschnitte maximal möglich ist, kann eine geringere Torsionssteifigkeit erreicht werden, falls dies anwendungsbedingt gewünscht ist.

Ganz besonders vorteilhaft ist ein Aktuator, der einen Antriebsmotor und ein erfindungsgemäßes Getriebe, das dem Antriebsmotor triebtechnisch nachgeschaltet ist, aufweist.

Bei einer ganz besonders vorteilhaften Ausführung ist die Auswertevorrichtung dazu ausgebildet, den Antriebsmotor in Abhängigkeit von einem Sensormesswert des wenigstens einen Verformungssensors zu steuern oder zu regeln. Insbesondere kann die Auswertevorrichtung dazu ausgebildet sein, den Antriebsmotor zu drosseln und/oder anzuhalten, wenn ein vorgegebener oder vorgebbarer Sensormesswert überschritten wird oder wenn ein vorgegebener oder vorgebbarer Sensormesswert unterschritten wird oder wenn ein vorgegebener oder vorgebbarer Sensormesswertbereich verlassen wird. Auf diese Weise kann eine Überlastung des Getriebes vermieden werden.

Von ganz besonderem Vorteil ist ein Roboter, insbesondere ein Industrieroboter, der wenigstens ein erfindungsgemäßes Getriebe oder einen erfindungsgemäßen Aktuator beinhaltet. Insbesondere kann das erfindungsgemäße Getriebe in einem Robotergelenk eingesetzt werden. Das Robotergelenk kann durch die Verwendung des erfindungsgemäßen Getriebes besonders vielseitig verwendet und überwacht werden.

Von ganz besonderem Vorteil ist ein Fahrwerk, insbesondere ein aktives Fahrwerk, für ein Kraftfahrzeug, das wenigstens ein erfindungsgemäßes Getriebe oder einen erfindungsgemäßen Aktuator aufweist. Ein ganz besonderer Vorteil ist es hierbei, dass ein hoher Überlastungsschutz und eine zuverlässige Überwachung des Getriebes einfach realisierbar ist, was die Fahrsicherheit erhöht. Von ganz besonderem Vorteil ist eine Lenkung, insbesondere PKW-Lenkung oder LKW-Lenkung, die wenigstens ein erfindungsgemäßes Getriebe aufweist. Die Lenkung kann insbesondere eine Servolenkung und/oder eine Überlagerungslenkung sein.

Ganz allgemein ist ein eine Vorrichtung, insbesondere ein Getriebe, bzw. ein Verfahren besonders vorteilhaft, das (insbesondere auch in Kombination mit wenigstens einem der vorstehend genannten Aspekte) wenigstens einen der folgenden Aspekte aufweist:
1. Getriebe mit einem ersten Getriebebauteilelement (3) und einem zweiten Getriebebauteilelement (4), die mittels wenigstens eines Verformungskörpers (29) verbunden sind, der Teil einer Drehmomentmessvorrichtung ist und der das erste Getriebebauteilelement (3) und das zweite Getriebebauteilelement (4) elastisch beweglich derart verbindet, dass eines der Getriebebauteilelemente (3, 4) durch eine Drehmomenteinwirkung um eine Rotationsachse relativ zu dem anderen der Getriebebauteilelemente (3, 4) rotierbar ist, dadurch gekennzeichnet, dass der wenigstens eine Verformungskörper (29) derart ausgebildet und angeordnet ist, dass die aufgrund der Drehmomenteinwirkung auf ihn einwirkende Kraft zu wenigstens 80%, insbesondere ausschließlich, eine Druckkraft (18) oder zu wenigstens 80%, insbesondere ausschließlich, eine Zugkraft (19) ist.
2. Getriebe nach Aspekt 1, dadurch gekennzeichnet, dass das erste Getriebebauteilelement (3) und das zweite Getriebebauteilelement (4) zusammen mit dem sie verbindenden wenigstens einen Verformungskörper (29) ein Getriebebauteil (1) bilden, welches ein Drehmoment überträgt oder ein Drehmoment abstützt.
3. Getriebe nach Aspekt 1 oder 2, dadurch gekennzeichnet, dass der Verformungskörper (29) an dem ersten Getriebebauteilelement (3) und/oder an dem zweiten Getriebebauteilelement (4) befestigt ist.
4. Getriebe nach Aspekt 1 oder 2, dadurch gekennzeichnet, dass der Verformungskörper (29) mit dem ersten Getriebebauteilelement (3) und/oder mit dem zweiten Getriebebauteilelement (4) gemeinsam einstückig hergestellt ist.
5. Getriebe nach einem der Aspekte 1 bis 3, dadurch gekennzeichnet, dass der Verformungskörper (29) Teil eines Verbinders ist, der an dem ersten Getriebebauteilelement (3) und/oder an dem zweiten Getriebebauteilelement (4) befestigt ist.
6. Getriebe nach Aspekt 5, dadurch gekennzeichnet, dass der Verbinder einen ersten Befestigungsabschnitt (25) aufweist, mittels dem er an dem ersten Getriebebauteilelement (3) befestigt ist, und einen zweiten Befestigungsabschnitt (28) aufweist, mittels dem er an dem zweiten Getriebebauteilelement (4) befestigt ist.
7. Getriebe nach Aspekt 5 oder 6, dadurch gekennzeichnet, dass die Befestigung des Verbinders (5) mit dem ersten Getriebebauteilelement (3) und/oder dem zweiten Getriebebauteilelement (4) eine kraftschlüssige Verbindung aufweist oder als ausschließlich kraftschlüssige Verbindung ausgebildet ist.
8. Getriebe nach Aspekt 5 oder 6, dadurch gekennzeichnet, dass die Befestigung des Verbinders (5) mit dem ersten Getriebebauteilelement (3) und/oder dem zweiten Getriebebauteilelement (4) eine formschlüssige Verbindung aufweist oder als ausschließlich formschlüssige Verbindung ausgebildet ist.
9. Getriebe nach einem der Aspekte 5 bis 6, dadurch gekennzeichnet, dass die Befestigung des Verbinders (5) mit dem ersten Getriebebauteilelement (3) und/oder dem zweiten Getriebebauteilelement (4) zerstörungsfrei lösbar ausgebildet ist.
10. Getriebe nach einem der Aspekte 5 bis 9, dadurch gekennzeichnet, dass a. der erste Befestigungsabschnitt als Steckabschnitt (13) ausgebildet ist oder einen Steckabschnitt (13) aufweist, und dass der erste Gegenbefestigungsabschnitt eine Steckausnehmung (14) ist oder eine Steckausnehmung (14) aufweist, in die der Steckabschnitt (13), insbesondere passgenau, eingreift, und/oder dass b. der zweite Befestigungsabschnitt als Steckabschnitt (13) ausgebildet ist oder einen Steckabschnitt (13) aufweist, und dass der zweite Gegenbefestigungsabschnitt eine Steckausnehmung (14) ist oder eine Steckausnehmung (14) aufweist, in die der Steckabschnitt (13), insbesondere passgenau, eingreift.
11. Getriebe nach Aspekt 10, dadurch gekennzeichnet, dass der Steckabschnitt (13) axial oder radial in die Steckausnehmung (14) des Getriebebauteilelements (3, 4) eingreift.
12. Getriebe nach einem der Aspekte 1 bis 11, dadurch gekennzeichnet, dass der Verformungskörper (29) durch einen Druckstab gebildet ist.
13. Getriebe nach einem der Aspekte 1 bis 11, dadurch gekennzeichnet, dass der Verformungskörper (29) durch einen Zugstab gebildet ist.
14. Getriebe nach einem der Aspekte 1 bis 13, dadurch gekennzeichnet, dass die aufgrund der Drehmomenteinwirkung auf den Verformungskörper (29) einwirkende Kraft in Abhängigkeit von dem Vorzeichen des Drehmomentes eine Druckkraft oder eine Zugkraft ist.
15. Getriebe nach einem der Aspekte 1 bis 14, dadurch gekennzeichnet, dass an dem wenigstens einen Verformungskörper (29) wenigstens ein Verformungsmesssensor (9), insbesondere ein Dehnungsmessstreifen (10), befestigt ist.
16. Getriebe nach Aspekt 15, dadurch gekennzeichnet, dass der Verformungsmesssensor (9) eine aufgrund der Zugkraft bzw. Druckkraft verursachte elastische Verformung, insbesondere eine Längung oder eine Stauchung, des Verformungskörpers (29) erfasst.
17. Getriebe nach Aspekt 15 oder 16, dadurch gekennzeichnet, dass die Drehmomentmessvorrichtung eine elektronische Auswertevorrichung aufweist, die dazu ausgebildet und eingerichtet ist, Messsignale von dem wenigstens einen Verformungsmesssensor (9) zu empfangen und daraus ein Drehmoment und/oder eine Drehzahl einer Getriebewelle und/oder eine Drehstellung einer Getriebewelle und/oder eine Drehrichtung einer Getriebewelle zu ermitteln.
18. Getriebe nach einem der Aspekte 1 bis 17, dadurch gekennzeichnet, dass mehrere Verformungskörper (29) Teil der Drehmomentmessvorrichtung sind und das erste Getriebebauteilelement (3) und das zweite Getriebebauteilelement (4) elastisch beweglich derart verbinden, dass eines der Getriebebauteilelemente (3, 4) durch eine Drehmomenteinwirkung um eine Rotationsachse relativ zu dem anderen der Getriebebauteilelemente (3, 4) rotierbar ist.
19. Getriebe nach Aspekt 18, dadurch gekennzeichnet, dass jeder Verformungskörper (29) derart ausgebildet und angeordnet ist, dass die aufgrund der Drehmomenteinwirkung auf ihn einwirkende Kraft zu wenigstens 80%, insbesondere ausschließlich, eine Druckkraft oder zu wenigstens 80%, insbesondere ausschließlich, eine Zugkraft ist.
20. Getriebe nach einem der Aspekte 5 bis 18, dadurch gekennzeichnet, dass der wenigstens eine Verbinder mehrere Verformungskörper (29) aufweist, die Teil der Drehmomentmessvorrichtung sind und derart ausgebildet und angeordnet ist, dass die aufgrund der Drehmomenteinwirkung auf ihn einwirkende Kraft zu wenigstens 80%, insbesondere ausschließlich, eine Druckkraft oder zu wenigstens 80%, insbesondere ausschließlich, eine Zugkraft ist.
21. Getriebe nach Aspekt 20, dadurch gekennzeichnet, dass, insbesondere je nach Vorzeichen des Drehmomentes, auf einen der Verformungskörper (29) des Verbinders (5) eine Zugkraft einwirkt und auf einen anderen der Verformungskörper (29) des Verbinders (5) eine Druckkraft einwirkt.
22. Getriebe nach einem der Aspekte 18 bis 21, dadurch gekennzeichnet, dass die Verformungskörper (29) hinsichtlich Form und Größe gleich ausgebildet sind
23. Getriebe nach einem der Aspekte 18 bis 21, dadurch gekennzeichnet, dass
   a. die mehreren Verformungskörper (29) derart elektrisch und/oder elektronisch miteinander verschaltet sind, dass sich Messsignalanteile, die nicht durch die Druckkraft oder die Zugkraft verursacht sind, insbesondere Messsignalanteile, die durch Querkräfte verursacht sind, zumindest teilweise gegenseitig kompensieren, oder dass
   b. die Auswertevorrichtung Messsignalanteile, die nicht durch die Druckkraft oder die Zugkraft verursacht sind, insbesondere Messsignalanteile, die durch Querkräfte verursacht sind, rechnerisch kompensiert.
24. Getriebe nach einem der Aspekte 1 bis 23, dadurch gekennzeichnet, dass das erste Getriebebauteilelement (3) und/oder das zweite Getriebebauteilelement (4) ringförmig ausgebildet sind.
25. Getriebe nach einem der Aspekte 1 bis 24, dadurch gekennzeichnet, dass das erste Getriebebauteilelement (3) eine Verzahnung aufweist und/oder das zweite Getriebebauteilelement (4) eine Verzahnung aufweist.
26. Getriebe nach einem der Aspekte 1 bis 25, dadurch gekennzeichnet, dass das erste Getriebebauteilelement (3) und/oder das zweite Getriebebauteilelement (4) Teil eines Lagers ist, mittels dem eine Getriebewelle rotierbar gelagert ist.
27. Getriebe nach einem der Aspekte 1 bis 26, dadurch gekennzeichnet, dass das erste Getriebebauteilelement (3) oder das zweite Getriebebauteilelement (4) als Getriebegehäuse (25) ausgebildet ist oder Teil eines Getriebegehäuses (25) ist.
28. Getriebe nach einem der Aspekte 1 bis 27, dadurch gekennzeichnet, dass das Getriebe ein Planetengetriebe oder ein Zykloidgetriebe ist.
29. Getriebe nach einem der Aspekte 1 bis 28, dadurch gekennzeichnet, dass das Getriebe ein Spannungswellengetriebe ist.
30. Getriebe nach Aspekt 29, dadurch gekennzeichnet, dass das erste Getriebebauteilelement (3) oder das zweite Getriebebauteilelement (4) Teile eines Circularsplines (2) oder eines Dynamicsplines oder eines Flexsplines (6) oder eines Wellengeneratoreinsatzes sind.
31. Getriebe nach einem der Aspekte 1 bis 30, dadurch gekennzeichnet, dass das Getriebe als ein Dreiwellengetriebe ausgebildet ist, bei dem eine rotierbar gelagerte erste Welle als Getriebeantrieb, eine rotierbar gelagerte zweite Welle als Getriebeabtrieb und eine dritte Welle, insbesondere relativ zu dem Getriebegehäuse, drehfest gehalten ist.
32. Aktuator beinhaltend einen Antriebsmotor und ein Getriebe nach einem der Aspekte 1 bis 31, das dem Antriebsmotor triebtechnisch nachgeschaltet ist.
33. Aktuator nach Aspekt 32, dadurch gekennzeichnet, dass die Auswertevorrichtung dazu ausgebildet ist, den Antriebsmotor in Abhängigkeit von einem Sensormesswert des wenigstens einen Verformungssensors zu steuern oder zu regeln.
34. Aktuator nach Aspekt 32 oder 33, dadurch gekennzeichnet, dass die Auswertevorrichtung dazu ausgebildet ist, den Antriebsmotor zu drosseln und/oder anzuhalten, wenn ein vorgegebener oder vorgebbarer Sensormesswert überschritten wird oder wenn ein vorgegebener oder vorgebbarer Sensormesswert unterschritten wird oder wenn ein vorgegebener oder vorgebbarer Sensormesswertbereich verlassen wird.
35. Robotergelenk, welches wenigstens ein Getriebe nach einem der Aspekte 1 bis 31 und/oder einen Aktuator nach einem der Aspekte 32 bis 34 aufweist.
36. Roboter, der wenigstens ein Getriebe nach einem der Aspekte 1 bis 31 und/oder einen Aktuator nach einem der Aspekte 32 bis 34 aufweist.
37. Fahrwerk, insbesondere aktives Fahrwerk für ein Kraftfahrzeug, welches wenigstens ein Getriebe nach einem der Aspekte 1 bis 31 und/oder einen Aktuator nach einem der Aspekte 32 bis 34 aufweist.
38. Lenkung, insbesondere PKW-Lenkung oder LKW-Lenkung, die wenigstens ein Getriebe nach einem der Aspekte 1 bis 31 und/oder einen Aktuator nach einem der Aspekte 32 bis 34 aufweist.
39. Lenkung nach Aspekt 38, dadurch gekennzeichnet, dass die Lenkung eine Servolenkung und/oder eine Überlagerungslenkung ist.
40. Drehmomentmessvorrichtung für ein Getriebe nach einem der Aspekte 1 bis 31.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel eines erfindungsgemäßen Getriebes,
- Fig. 2: eine Detailansicht ersten Ausführungsbeispiels mit einer Blickrichtung entlang der Mittelachse, wobei das Getriebegehäuse 25 und die Getriebeabtriebswelle nicht dargestellt sind,
- Fig. 3: das Getriebebauteil des ersten Ausführungsbeispiels,
- Fig. 4: die Rückansicht eines der Verbinder für ein erfindungsgemäßes Getriebe gemäß dem ersten Ausführungsbeispiel,
- Fig. 5: die Vorderansicht eines der Verbinder für ein erfindungsgemäßes Getriebe gemäß dem ersten Ausführungsbeispiel,
- Fig. 6: eine Seitenansicht eines der Verbinder für ein erfindungsgemäßes Getriebe gemäß dem ersten Ausführungsbeispiel,
- Fig. 7: eine schematische Darstellung der Kräfteverteilung eines der Verbinder für ein erfindungsgemäßes Getriebe gemäß dem ersten Ausführungsbeispiel,
- Fig. 8: ein zweites Ausführungsbeispiel eines erfindungsgemäßen Getriebes,
- Fig. 9: die Rückansicht eines zweiten Ausführungsbeispiels eines Verbinders für ein erfindungsgemäßes Getriebe,
- Fig. 10: die Vorderansicht des zweiten Ausführungsbeispiels eines Verbinders für ein erfindungsgemäßes Getriebe, und
- Fig. 11: eine Seitenansicht des zweiten Ausführungsbeispiels eines Verbinders für ein erfindungsgemäßes Getriebe.

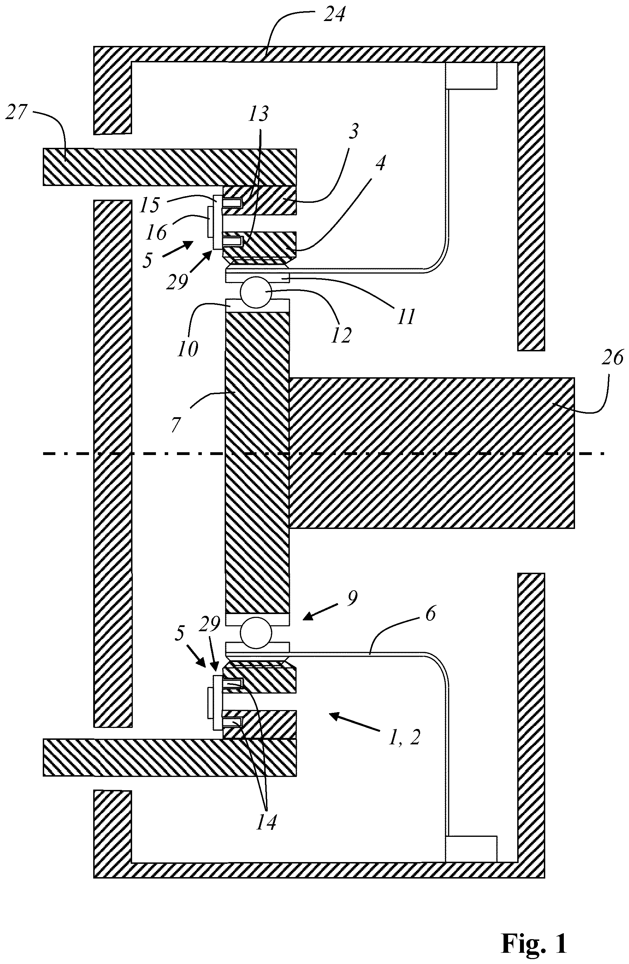

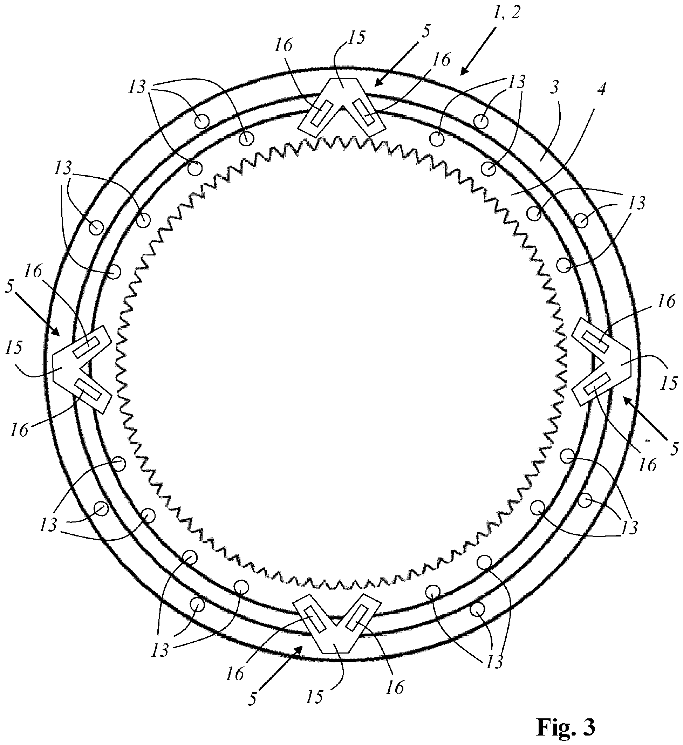

Figur 1 zeigt ein erstes Ausführungsbeispiel eines erfindungsgemäßen Getriebes, das als Spannungswellengetriebe ausgebildet ist. Das Spannungswellengetriebe hat ein Getriebegehäuse 24 und ein Getriebebauteil 1, nämlich einen Circularspline 2, welches ein Drehmoment überträgt oder ein Drehmoment abstützt. Das Getriebebauteil 1 (Circularspline 2) ist in Figur 3 separat dargestellt. Der Circularspline 2 ist mit einer Getriebeabtriebswelle 27 drehfest verbunden, die als Hohlwelle ausgebildet ist.

Das Getriebebauteil 1 weist ein erstes Getriebebauteilelement 3 und ein zweites Getriebebauteilelement 4 auf, die mittels vier Verbindern 5, die jeweils an dem ersten Getriebebauteilelement 3 und an dem zweiten Getriebebauteilelement 4 befestigt sind, elastisch beweglich miteinander verbunden sind. Das erste Getriebebauteilelement 3 ist als Ring ausgebildet und weist mehrere axiale Bohrungen auf, die als Steckausnehmungen 13 für Steckabschnitte 14 der Verbinder 5 ausgebildet sind. Das zweite Getriebebauteilelement 4 ist als innenverzahnter Ring ausgebildet und weist ebenfalls mehrere axiale Bohrungen auf, die als Steckausnehmungen 13 für Steckabschnitte 14 der Verbinder 5 ausgebildet sind.

Jeder Verbinder weist einen ersten Schenkel 20 und einen zweiten Schenkel 21 auf, die Verformungskörper 29 und der Teile einer Drehmomentmessvorrichtung sind und die das erste Getriebebauteilelement (3) und das zweite Getriebebauteilelement (4) elastisch beweglich derart verbinden, dass eines der Getriebebauteilelemente (3, 4) durch eine Drehmomenteinwirkung um eine Rotationsachse relativ zu dem anderen der Getriebebauteilelemente (3, 4) rotierbar ist, wobei die Schenkel 20, 21 derart ausgebildet und angeordnet sind, dass (je nach Rotationsrichtung) die aufgrund der Drehmomenteinwirkung auf den einen Schenkel 20, 21 einwirkende Kraft ausschließlich eine Druckkraft und die auf den jeweils anderen Schenkel 20, 21 einwirkende Kraft ausschließlich eine Zugkraft ist.

Das Spannungswellengetriebe weist außerdem einen radialflexiblen außenverzahnten hutförmigen Flexspline 6 auf, der drehfest mit dem Getriebegehäuse 24 verbunden ist und in dem von einem Circularspline 2 umgebenen Raumvolumen angeordnet ist. Innerhalb des Flexsplines 6 ist ein ovaler Wellengeneratoreinsatz 7 rotierbar angeordnet, dessen Außenumfang 8 einen Lagersitz für ein radialflexibles Wälzlager 9 aufweist, das einen Innenring 10, einen Außenring 11 und Wälzkörper 12 hat. Der Wellengeneratoreinsatz 7 ist mit einer Getriebeantriebswelle 29 drehfest verbunden. Über das radialflexible Wälzlager 9 steht der Wellengeneratoreinsatz 7 mit dem radialflexiblen Flexspline 6 in Kontakt. Das radialflexible Wälzlager 9 ermöglicht es, den Wellengeneratoreinsatz 7 relativ zu dem Circularspline 2 rotieren zu können. Der Wellengeneratoreinsatz 7 biegt das Wälzlager 9 und den Flexspline 6 zu einer ovalen Form, um die Verzahnungen des Circularsplines 2 und des Flexsplines 6 in der Hochachse des ovalen Wellengeneratoreinsatzes 7 miteinander in Eingriff zu bringen.

Beispielsweise kann das Getriebe außer dem Drehmomentsensor weitere (nicht dargestellte) Sensoren aufweisen, beispielsweise einen (nicht dargestellten) Temperatursensor und/oder einen (nicht dargestellten) Vibrationssensor. Die weiteren Sensoren können jeweils an einem der Verbinder angeordnet sein.

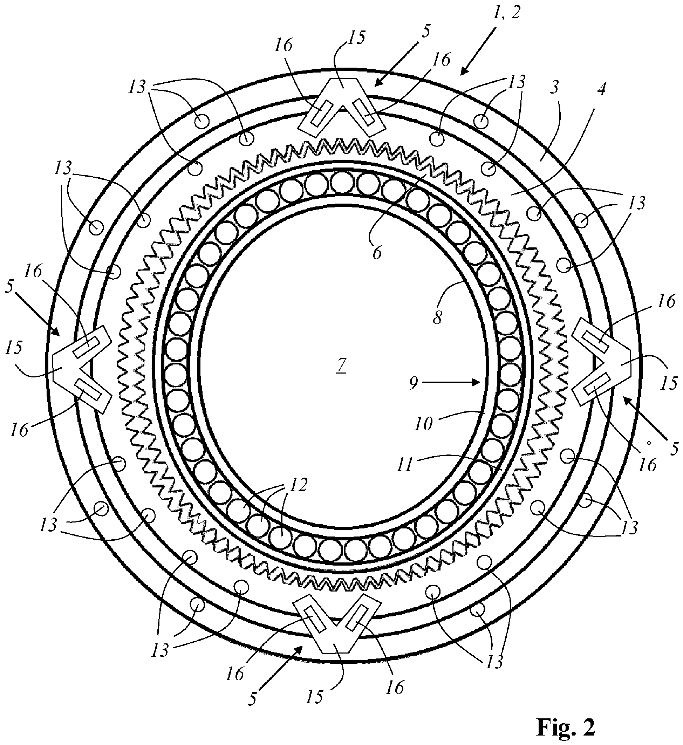

Figur 2 zeigt eine Detailansicht des Spannungswellengetriebes mit einer Blickrichtung entlang der Mittelachse, wobei das Getriebegehäuse 24 und die Getriebeabtriebswelle der besseren Übersichtlichkeit halber nicht dargestellt sind.

Figur 3 zeigt das Getriebebauteil 1 des Spannungswellengetriebes.

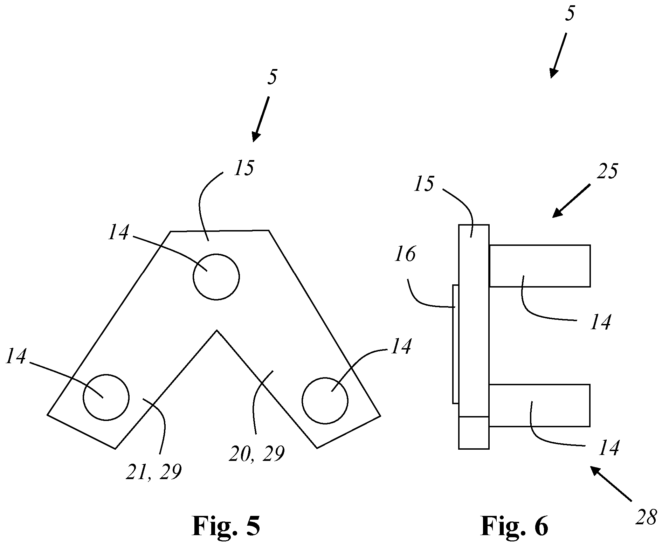

Figur 5 zeigt den Circularspline des zweiten Ausführungsbeispiels separat dargestellt.

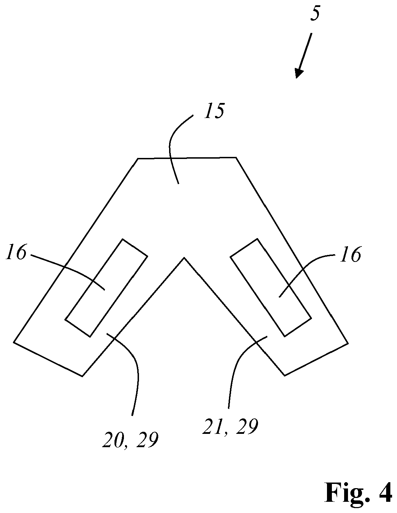

Die Figuren 4 bis 6 zeigen verschiedene Ansichten eines der Verbinder 5 des in Figur 1 dargestellten erfindungsgemäßen Getriebes gemäß dem ersten Ausführungsbeispiel. Die Figur 4 zeigt die Rückansicht eines der Verbinder 5. Es ist in dieser Figur zu erkennen, dass der Verbinder 5 einen v-förmig ausgebildeten Verformungsabschnitt 15 aufweist, der beispielsweise aus einem ausgestanzten Blech hergestellt sein kann. Auf jeden Schenkel des v-förmig ausgebildeten Verformungsabschnitts 15 ist rückseitig jeweils ein Dehnungsmessstreifen 16 angeklebt, der es ermöglicht, die auf die Schenkel 20, 21 des v-förmig ausgebildeten Verformungsabschnitts 15 einwirkenden Zug- bzw. Druckkräfte zu messen.

An dem v-förmig ausgebildeten Verformungsabschnitt 15 sind vorderseitig hervorstehende Steckabschnitte 14, die als Steckbolzen ausgebildet sind, angeordnet, die in die Steckausnehmungen 13 des Getriebebauteils 1 eingesteckt werden können, was in den Figuren 5 und 6 gut zu erkennen ist.

Der Verbinder 5 weist einen ersten Befestigungsabschnitt 25 auf, mittels dem er an dem ersten Getriebebauteilelement 3 befestigt wird. Der Verbinder 5 weist außerdem einen zweiten Befestigungsabschnitt 28 auf, mittels dem er an dem zweiten Getriebebauteilelement 4 befestigt wird.

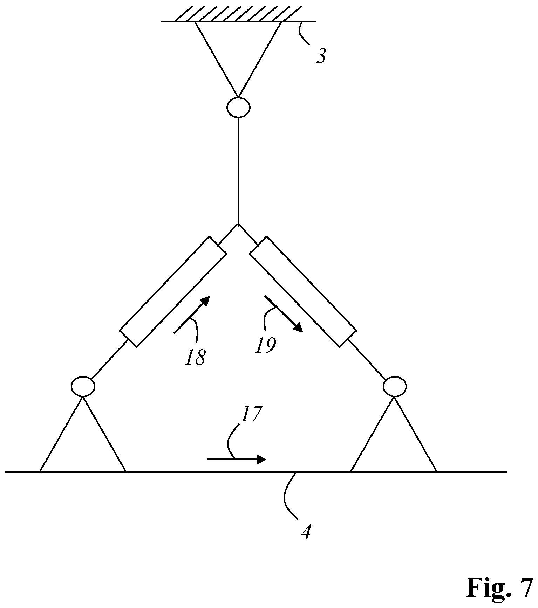

Figur 7 zeigt eine schematische Darstellung der Kräfteverteilung eines der Verbinder 5 für ein erfindungsgemäßes Getriebe gemäß dem ersten Ausführungsbeispiel, wobei beispielhaft das erste Getriebebauteilelement 3 als drehfest gehalten angenommen wird und angenommen wird, dass auf das zweite Getriebebauteilelement 4 eine Kraft 17 einwirkt. Die Kraft 17 bewirkt, dass ein Schenkel des v-förmig ausgebildeten Verformungsabschnitts 15 mit einer Druckkraft 18 auf Druck belastet wird (in der Figur 7 links) und dass der andere Schenkel des v-förmig ausgebildeten Verformungsabschnitts 15 mit einer Zugkraft 19 auf Zug belastet wird.

Durch die Messung der Kräfte 18 und 19 kann auf das über das Getriebebauteil 1 übertragene bzw. abgestützte Drehmoment geschlossen werden.

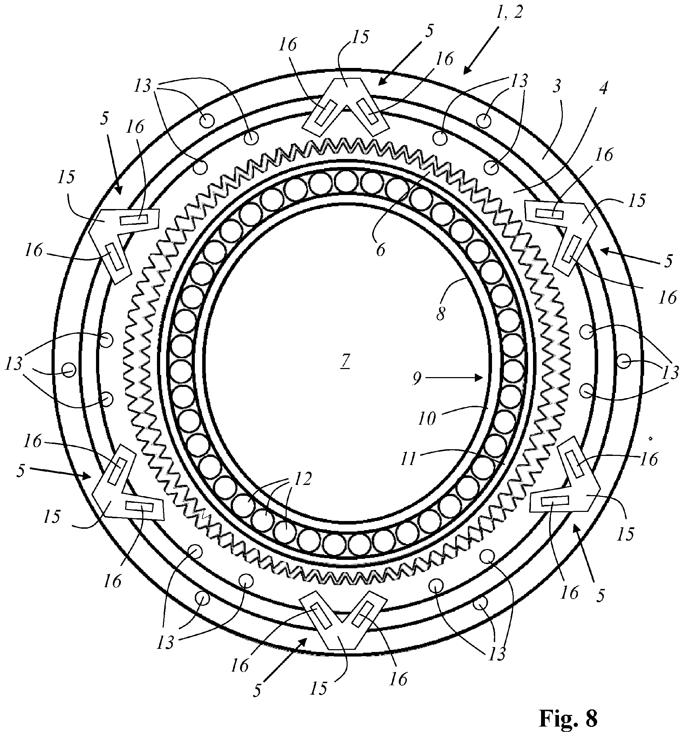

Figur 8 zeigt zweites Ausführungsbeispiel eines erfindungsgemäßen Getriebes, das im Wesentlichen dem ersten Ausführungsbeispiel entspricht, wobei jedoch im Unterscheid zu dem ersten Ausführungsbeispiel insgesamt sechs der Verbinder 5 vorhanden sind. Das Getriebebauteil 1 (Circularspline 2) ist daher bei dem zweiten Ausführungsbeispiel weniger torsionselastisch ausgebildet als bei dem ersten Ausführungsbeispiel.

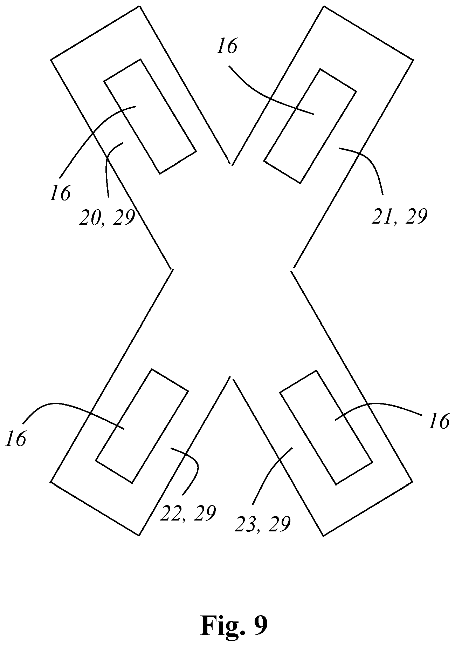

Die Figuren 9 bis 11 zeigen verschiedene Ansichten eines zweiten Ausführungsbeispiels eines Verbinders 5 für ein erfindungsgemäßes Getriebe. Die Figur 9 zeigt die Rückansicht des Verbinders. Es ist in dieser Figur zu erkennen, dass der Verbinder 5 einen x-förmig ausgebildeten Verformungsabschnitt 15 aufweist, der beispielsweise aus einem ausgestanzten Blech hergestellt sein kann. An jeden Schenkel 20, 21, 22, 23 des x-förmig ausgebildeten Verformungsabschnitts 15 ist rückseitig jeweils ein Dehnungsmessstreifen 16 angeklebt, der es ermöglicht, die auf die Schenkel des x-förmig ausgebildeten Verformungsabschnitts 15 einwirkenden Zug- bzw. Druckkräfte zu messen.

Jeder Verbinder weist einen ersten Schenkel 20, einen zweiten Schenkel 21, einen dritten Schenkel 22 und einen vierten Schenkel 23 auf, die Verformungskörper 29 und der Teil einer Drehmomentmessvorrichtung sind und die das erste Getriebebauteilelement (3) und das zweite Getriebebauteilelement (4) elastisch beweglich derart verbinden, dass eines der Getriebebauteilelemente (3, 4) durch eine Drehmomenteinwirkung um eine Rotationsachse relativ zu dem anderen der Getriebebauteilelemente (3, 4) rotierbar ist, wobei die Schenkel 20, 21, 22, 23 derart ausgebildet und angeordnet sind, dass (je nach Rotationsrichtung) die aufgrund der Drehmomenteinwirkung auf je zwei der Schenkel 20, 21, 22, 23 einwirkende Kraft ausschließlich eine Druckkraft und die auf die beiden anderen Schenkel 20, 21, 22, 23 einwirkende Kraft ausschließlich eine Zugkraft ist.

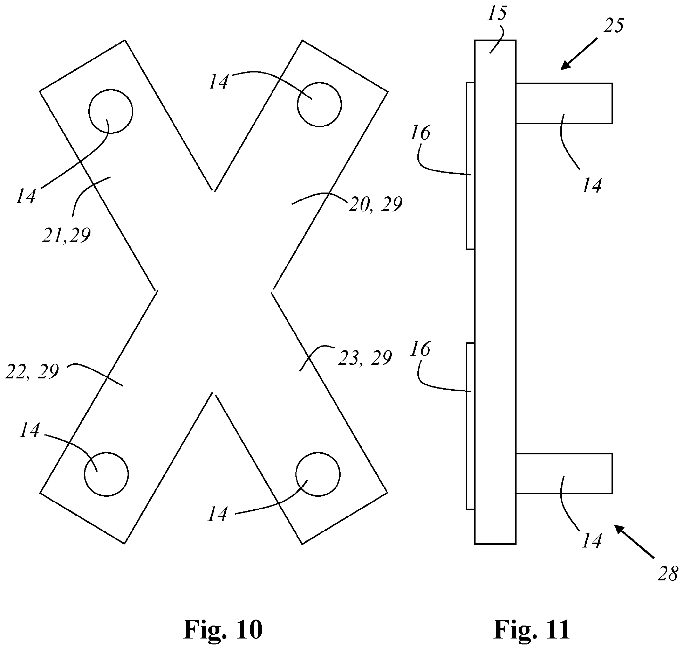

An dem x-förmig ausgebildeten Verformungsabschnitt 15 sind vorderseitige hervorstehende Steckabschnitte 14, die als Steckbolzen ausgebildet sind, angeordnet, die in Steckausnehmungen 13 des Getriebebauteils 1 eingesteckt werden können, was in den Figuren 10 und 11 gut zu erkennen ist.

Das erste Getriebebauteilelement 3 und das zweite Getriebebauteilelement 4 werden mit Steckausnehmungen 13 derart versehen, dass die Steckabschnitte 14 der Verbinder 5 zum Zwecke der Befestigung eingesteckt werden können, wobei die Anzahl und die Anordnung der Steckausnehmungen 13 vorzugsweise derart gewählt ist, dass die Verwendung von unterschiedlichen Anzahlen von Verbindern 5 ermöglicht ist.

### Bezugszeichenliste:

- 1: Getriebebauteil
- 2: Circularspline
- 3: erstes Getriebebauteilelement
- 4: zweites Getriebebauteilelement
- 5: Verbinder
- 6: Flexspline
- 7: Wellengeneratoreinsatz
- 8: Außenumfang
- 9: Wälzlager
- 10: Innenring
- 11: Außenring
- 12: Wälzkörper
- 13: Steckabschnitt
- 14: Steckausnehmung
- 15: Verformungsabschnitt
- 16: Dehnungsmessstreifen
- 17: Kraft
- 18: Kraft
- 19: Kraft
- 20: Erster Schenkel
- 21: Zweiter Schenkel
- 22: Dritter Schenkel
- 23: Vierter Schenkel
- 24: Getriebegehäuse
- 25: Erster Befestigungsabschnitt
- 26: Getriebeantriebswelle
- 27: Getriebeabtriebswelle
- 28: Zweiter Befestigungsabschnitt
- 29: Verformungskörper

## Patentansprüche

1. Getriebe mit einem ersten Getriebebauteilelement (3) und einem zweiten Getriebebauteilelement (4), die mittels wenigstens eines Verformungskörpers (29) verbunden sind, der Teil einer Drehmomentmessvorrichtung ist und der das erste Getriebebauteilelement (3) und das zweite Getriebebauteilelement (4) elastisch beweglich derart verbindet, dass eines der Getriebebauteilelemente (3, 4) durch eine Drehmomenteinwirkung um eine Rotationsachse relativ zu dem anderen der Getriebebauteilelemente (3, 4) rotierbar ist, **dadurch gekennzeichnet, dass** der wenigstens eine Verformungskörper (29) derart ausgebildet und angeordnet ist, dass die aufgrund der Drehmomenteinwirkung auf ihn einwirkende Kraft zu wenigstens 80%, insbesondere ausschließlich, eine Druckkraft (18) oder zu wenigstens 80%, insbesondere ausschließlich, eine Zugkraft (19) ist.

2. Getriebe nach Anspruch 1, **dadurch gekennzeichnet, dass** das erste Getriebebauteilelement (3) und das zweite Getriebebauteilelement (4) zusammen mit dem sie verbindenden wenigstens einen Verformungskörper (29) ein Getriebebauteil (1) bilden, welches ein Drehmoment überträgt oder ein Drehmoment abstützt.

3. Getriebe nach Anspruch 1 oder 2, **dadurch gekennzeichnet, dass** a. der Verformungskörper (29) an dem ersten Getriebebauteilelement (3) und/oder an dem zweiten Getriebebauteilelement (4) befestigt ist, oder dass b. der Verformungskörper (29) mit dem ersten Getriebebauteilelement (3) und/oder mit dem zweiten Getriebebauteilelement (4) gemeinsam einstückig hergestellt ist.

4. Getriebe nach einem der Ansprüche 1 bis 3, **dadurch gekennzeichnet, dass** der Verformungskörper (29) Teil eines Verbinders ist, der an dem ersten Getriebebauteilelement (3) und/oder an dem zweiten Getriebebauteilelement (4) befestigt ist.

5. Getriebe nach Anspruch 4, **dadurch gekennzeichnet, dass** das Getriebe wenigstens eines der folgenden Merkmale a bis d aufweist:
a. der Verbinder weist einen ersten Befestigungsabschnitt (25) auf, mittels dem er an dem ersten Getriebebauteilelement (3) befestigt ist, und weist einen zweiten Befestigungsabschnitt (28) auf, mittels dem er an dem zweiten Getriebebauteilelement (4) befestigt ist,
b. die Befestigung des Verbinders (5) mit dem ersten Getriebebauteilelement (3) und/oder dem zweiten Getriebebauteilelement (4) weist eine kraftschlüssige Verbindung auf oder ist als ausschließlich kraftschlüssige Verbindung ausgebildet,
c. die Befestigung des Verbinders (5) mit dem ersten Getriebebauteilelement (3) und/oder dem zweiten Getriebebauteilelement (4) weist eine formschlüssige Verbindung auf oder ist als ausschließlich formschlüssige Verbindung ausgebildet,
d. die Befestigung des Verbinders (5) mit dem ersten Getriebebauteilelement (3) und/oder dem zweiten Getriebebauteilelement (4) ist zerstörungsfrei lösbar ausgebildet.

6. Getriebe nach Anspruch 5, **dadurch gekennzeichnet, dass**
a. der erste Befestigungsabschnitt als Steckabschnitt (13) ausgebildet ist oder einen Steckabschnitt (13) aufweist, und dass der erste Gegenbefestigungsabschnitt eine Steckausnehmung (14) ist oder eine Steckausnehmung (14) aufweist, in die der Steckabschnitt (13), insbesondere passgenau, eingreift, und/oder dass
b. der zweite Befestigungsabschnitt als Steckabschnitt (13) ausgebildet ist oder einen Steckabschnitt (13) aufweist, und dass der zweite Gegenbefestigungsabschnitt eine Steckausnehmung (14) ist oder eine Steckausnehmung (14) aufweist, in die der Steckabschnitt (13), insbesondere passgenau, eingreift.

7. Getriebe nach einem der Ansprüche 1 bis 6, **dadurch gekennzeichnet, dass** an dem wenigstens einen Verformungskörper (29) wenigstens ein Verformungsmesssensor (9), insbesondere ein Dehnungsmessstreifen (10), befestigt ist, der eine aufgrund der Zugkraft bzw. Druckkraft verursachte elastische Verformung, insbesondere eine Längung oder eine Stauchung, des Verformungskörpers (29) erfasst.

8. Getriebe nach einem der Ansprüche 1 bis 7, **dadurch gekennzeichnet, dass** die Drehmomentmessvorrichtung eine elektronische Auswertevorrichung aufweist, die dazu ausgebildet und eingerichtet ist, Messsignale von dem wenigstens einen Verformungsmesssensor (9) zu empfangen und daraus ein Drehmoment und/oder eine Drehzahl einer Getriebewelle und/oder eine Drehstellung einer Getriebewelle und/oder eine Drehrichtung einer Getriebewelle zu ermitteln.

9. Getriebe nach einem der Ansprüche 4 bis 8, **dadurch gekennzeichnet, dass** der wenigstens eine Verbinder mehrere Verformungskörper (29) aufweist, die Teil der Drehmomentmessvorrichtung sind und derart ausgebildet und angeordnet ist, dass die aufgrund der Drehmomenteinwirkung auf ihn einwirkende Kraft zu wenigstens 80%, insbesondere ausschließlich, eine Druckkraft oder zu wenigstens 80%, insbesondere ausschließlich, eine Zugkraft ist.

10. Getriebe nach Anspruch 9, **dadurch gekennzeichnet, dass**, insbesondere je nach Vorzeichen des Drehmomentes, auf einen der Verformungskörper (29) des Verbinders (5) eine Zugkraft einwirkt und auf einen anderen der Verformungskörper (29) des Verbinders (5) eine Druckkraft einwirkt.

11. Getriebe nach Anspruch 9 oder 10, **dadurch gekennzeichnet, dass**
a. die mehreren Verformungskörper (29) derart elektrisch und/oder elektronisch miteinander verschaltet sind, dass sich Messsignalanteile, die nicht durch die Druckkraft oder die Zugkraft verursacht sind, insbesondere Messsignalanteile, die durch Querkräfte verursacht sind, zumindest teilweise gegenseitig kompensieren, oder dass
b. die Auswertevorrichtung Messsignalanteile, die nicht durch die Druckkraft oder die Zugkraft verursacht sind, insbesondere Messsignalanteile, die durch Querkräfte verursacht sind, rechnerisch kompensiert.

12. Getriebe nach einem der Ansprüche 1 bis 11, **dadurch gekennzeichnet, dass** das Getriebe wenigstens eines der folgenden Merkmale a bis f aufweist:
a. das erste Getriebebauteilelement (3) und/oder das zweite Getriebebauteilelement (4) sind ringförmig ausgebildet,
b. das erste Getriebebauteilelement (3) weist eine Verzahnung auf,
c. das zweite Getriebebauteilelement (4) weist eine Verzahnung auf,
d. das erste Getriebebauteilelement (3) ist Teil eines Lagers ist, mittels dem eine Getriebewelle rotierbar gelagert ist,
e. das zweite Getriebebauteilelement (4) ist Teil eines Lagers ist, mittels dem eine Getriebewelle rotierbar gelagert ist,
f. das erste Getriebebauteilelement (3) oder das zweite Getriebebauteilelement (4) ist als Getriebegehäuse (25) ausgebildet oder ist Teil eines Getriebegehäuses (25).

13. Aktuator beinhaltend einen Antriebsmotor und ein Getriebe nach einem der Ansprüche 1 bis 12, das dem Antriebsmotor triebtechnisch nachgeschaltet ist, vorzugsweise mit einer die Auswertevorrichtung (24) den Antriebsmotor in Abhängigkeit von den Messsignalen steuert oder regelt oder mit einer eine Steuerungsvorrichtung, die Signale von der Auswertevorrichtung (24) empfängt, den Antriebsmotor in Abhängigkeit von den Messsignalen steuert oder regelt.

14. Aktuator nach Anspruch 13, **dadurch gekennzeichnet, dass** die Auswertevorrichtung dazu ausgebildet ist, den Antriebsmotor zu drosseln und/oder anzuhalten, wenn ein vorgegebener oder vorgebbarer Sensormesswert überschritten wird oder wenn ein vorgegebener oder vorgebbarer Sensormesswert unterschritten wird oder wenn ein vorgegebener oder vorgebbarer Sensormesswertbereich verlassen wird.

15. Drehmomentmessvorrichtung für ein Getriebe nach einem der Ansprüche 1 bis 12.
